# EUROPÄISCHE PATENTSCHRIFT

(11) **EP 2 084 451 B1**
(45) Veröffentlichungstag und Bekanntmachung des Hinweises auf die Patenterteilung: **02.05.2018**
(21) Anmeldenummer: 07801864.5
(22) Anmeldetag: 24.08.2007
(51) Int. Cl.: F16N 25/00

(54) **SCHMIERMITTELVERTEILER**
LUBRICANT DISTRIBUTOR
DISTRIBUTEUR DE LUBRIFIANT

(30) Priorität: 20.10.2006 DE 202006016377 U
(43) Veröffentlichungstag der Anmeldung: 05.08.2009
(73) Patentinhaber: SKF Lubrication Systems Germany GmbH, 69190 Walldorf (DE)
(72) Erfinder: PALUNCIC, Zdravko, 67067 Ludwigshafen (DE); MANDERA, Markus, 69181 Leimen (DE)
(74) Vertreter: Keil & Schaafhausen Patent- und Rechtsanwälte PartGmbB
(86) Internationale Anmeldenummer: PCT/EP2007/007436
(87) Internationale Veröffentlichungsnummer: WO 2008/046466

(56) Entgegenhaltungen:
- EP-A- 1 712 829
- CH-A- 476 254
- DE-U1-202005 017 065
- JP-A- 2002 130 592
- JP-A- 2005 201 348
- JP-Y1- S 499 406

## Beschreibung

Die Erfindung betrifft einen Schmiermittelverteiler mit einer Verteilerplatte und wenigstens einem mit dieser verbindbaren Injektor. Weiter betrifft die Erfindung einen Injektor sowie eine Verteilerplatte für einen derartigen Schmiermittelverteiler.

Aus der EP 0 981 008 B1 ist ein Schmiermittelverteiler bekannt, bei welchem die Injektoren (Verteilerelemente) unmittelbar in der Verteilerplatte ausgebildet sind. Die Injektoren haben folglich kein jeweils separates Gehäuse, wodurch ein rasches Auswechseln der einzelnen Injektoren erschwert werden kann. Weiter wird in einigen Anwendungsfällen die Austauschbarkeit des gesamten Schmiermittelverteilers als verbesserungswürdig empfunden.

Aus dem Gebrauchsmuster DE 20 2005 017 065 U1 ist eine Kolbenanordnung, insbesondere für Zumessventile, Durchflusssensoren oder hydraulische Motoren bekannt. Hierbei sind drei Injektorkörper auf einer gemeinsamen Verteilerleiste mit jeweils zwei Zylinderkopfschrauben befestigt. Jeder einzelne Injektor besteht aus einem Injektorkörper, in dem sich ein erster Kolben als Injektorkolben mit Anbauteilen befindet. Die Zufuhr von Schmierstoff in die Verteilereinheit erfolgt durch eine Zuleitung, die als eine Durchgangsbohrung in der Verteilerleiste mit seitlichen Anschlussgewinden für Einschraubverschraubungen zum Anschluss der Pumpenleitung bzw. weiterer Verteilerleisten ausgebildet ist. Die Auslässe der einzelnen Injektoren sind in die Verteilerleiste zurückgeführt und können über gerade (oder abgewinkelte) Einschraubverschraubungen an Schmierleitungen angeschlossen werden, die beispielsweise zu einer Lagerstelle führen.

Ein zu der oben erläuterten Kolbenanordnung ähnliches System wird auch in der Druckschrift EP 1 712 829 A2 offenbart.

Injektoren, die in ihrem unteren Gehäusebereich einen Schmierstoffeinlass und in ihrem oberen Gehäusebereich einen Schmierstoffauslass aufweisen, sind beispielsweise aus JP 2005-201348 A und JP 2002-130592 A bekannt.

Dokument CH 476 254 A offenbart eine Schmiermittelverteileinrichtung zur Versorgung verschiedener Schmierstellen einer Maschine. Dazu wird Schmiermittel in einen Verteilerblock gedrückt, der an der Außenseite mehrere druckbetätigte Verdrängungsdosiervorrichtungen aufweist. Jede der Dosiervorrichtungen weist eine Kammer mit einem Kolben auf, der durch eine Feder nach unten gedrückt wird. Durch den Schmiermitteldruck wird Schmiermittel in die Kammer eingebracht. Wenn der Schmiermitteldruck sinkt, schiebt die Feder den Kolben nach unten, so dass die in der Kammer befindliche Menge an Schmiermittel ausgestoßen wird.

Dokument JP S49 9406 Y1 betrifft eine Schmiervorrichtung, der durch einen Schmiermitteleingang ein Schmiermittel zugeführt wird. Das Schmiermittel fließt an einem Rückschlagventil vorbei in eine Schmiermittelleitung und verschiebt einen Kolben in einem Zylinder gegen eine Kraft einer Feder nach links. Dadurch wird das Schmiermittel, das sich in einem Bereich B des Zylinders links des Kolbens befindet, durch eine Ausgangsöffnung zu einer Lagerstelle gefördert. Wenn in einem nächsten Schritt der Druck der Schmiermittelversorgung an dem Schmiermitteleingang abfällt, wird der Kolben durch die Federkraft der Feder zurück nach rechts in seine Ausgangsposition geschoben. Schmiermittel, welches sich in einem Bereich C des Zylinders rechts des Kolbens befindet, wird dabei durch die Schmiermittelleitung in den Bereich B weiterbefördert.

Aufgabe der vorliegenden Erfindung ist es daher, einen Schmiermittelverteiler zu schaffen, welcher bei einfacher und schneller Montage und Demontage den Einsatz einer großen Anzahl von einzeln auswechselbaren Injektoren möglich macht.

Diese Aufgabe wird erfindungsgemäß im Wesentlichen durch einen Schmiermittelverteiler gelöst, dessen wenigstens einer Injektor jeweils aus einem eine Längsachse definierenden Gehäuse mit einem Einlass und einem Auslass, die mit entsprechenden Anschlüssen in der Verteilerplatte in Verbindung stehen, sowie aus einer in dem Gehäuse ausgebildeten Dosier- und Umsteuereinheit gebildet ist, wobei die Ein- und Auslässe auf der der Verteilerplatte zugewandten Seite bzw. an dem der Verteilerplatte zugewandten Ende des Gehäuses angeordnet sind. Da jeder der Injektoren ein eigenes Gehäuse aufweist, ist es möglich, einzelne Injektoren rasch auszuwechseln, ohne den gesamten Schmiermittelverteiler auszutauschen. Diese Austauschbarkeit wird insbesondere dadurch begünstigt, dass die entsprechenden Anschlüsse der Verteilerplatte sowie die Ein- und Auslässe des Injektors jeweils nur auf einer Seite bzw. an einem Ende des Gehäuses angeordnet sind.

Hierbei ist der wenigstens eine Injektor derart an der Verteilerplatte befestigt, dass die Längsachse des Gehäuses des Injektors zumindest im Wesentlichen senkrecht zu der Fläche der Verteilerplatte ausgerichtet ist, in der die mit dem Ein- und Auslass verbundenen Anschlüsse vorgesehen sind. Mit anderen Worten lässt sich der beispielsweise zylindrisch und/oder mit einem Vielkantprofil ausgebildete Injektor im Wesentlichen aufrecht stehend an der Verteilerplatte befestigen. Hierdurch können besonders viele Injektoren auf einer Verteilerplatte angeordnet werden.

Erfindungsgemäß ist ferner der wenigstens eine Injektor mit einem Gewindeabschnitt in eine Gewindebohrung der Verteilerplatte einschraubbar, wobei der Ein- und Auslass des Injektors auf der Seite des Gewindeabschnitts liegt. Dies bedeutet, dass sowohl der Einlass als auch der Auslass beispielsweise in einer Stirnfläche des Injektorgehäuses angeordnet sein können, es ist jedoch auch möglich, dass nur der Ein- oder Auslass in der Stirnfläche des Gehäuses vorgesehen ist, während der Aus- oder Einlass nahe der Stirnfläche des Gehäuses beispielsweise in der Mantelfläche des Gehäuses vorgesehen ist. Somit kann der Injektor durch die Verbindung mit der Verteilerplatte rasch und einfach an die entsprechenden Anschlüsse der Verteilerplatte angeschlossen werden.

Nach einer anderen Möglichkeit der Realisierung ist der wenigstens eine Injektor derart an der Verteilerplatte befestigt, dass die Längsachse des Gehäuses des Injektors zumindest im Wesentlichen parallel zu der Fläche der Verteilerplatte ausgerichtet ist, in der die mit dem Ein- und Auslass verbundenen Anschlüsse vorgesehen sind. Der Injektor, der bei dieser Ausführungsform vorzugsweise eine abgeflachte Fläche aufweist, die der Verteilerplatte zugewandt ist, wird folglich im Wesentlichen auf die Verteilerplatte aufgelegt. Die Bauhöhe des Schmiermittelverteilers kann hierdurch reduziert werden.

Zur Verbindung der Injektoren an der Verteilerplatte ist bei dieser Realisierungsmöglichkeit vorzugsweise wenigstens ein Halteblech oder dergleichen Befestigungselement vorgesehen, welches beispielsweise über eine Schraube derart gegen die Verteilerplatte spannbar ist, dass der wenigstens eine Injektor auf der Verteilerplatte festklemmbar ist, wobei der Ein- und Auslass des Injektors auf der dem Halteblech abgewandten Seite liegt. Es können beispielsweise zwei Injektoren über ein gemeinsames Halteblech an der Verteilerplatte befestigt werden, wobei eine Schraube oder dergleichen zwischen den beiden Injektoren verlaufend das Halteblech gegen die Verteilerplatte spannt. Zur sicheren Anbindung der Injektoren an die Verteilerplatte wird es jedoch bevorzugt, wenn zwei Injektoren durch zwei Haltebleche oder dergleichen fixiert werden.

Die der Erfindung zugrunde liegende Aufgabe wird weiter durch einen Injektor gelöst, der beispielsweise in einem Schmiermittelverteiler der oben genannten Art einsetzbar ist. Erfindungsgemäß weist dieser Injektor ein Gehäuse, in welchem an demselben Ende und/oder auf derselben Seite des Gehäuses ein Schmierstoffeinlass und ein Schmierstoffauslass ausgebildet sind, und eine in dem Gehäuse aufgenommene Dosier- und Umsteuereinheit auf, die einen Zylinderraum und einen darin durch den Schmierstoffdruck gegen die Kraft eines elastischen Elements verschiebbaren Kolben sowie ein zwischen dem Zylinderraum und dem Schmierstoffeinlass angeordnetes Rückschlagventil aufweist, wobei der Kolben den Zylinderraum in eine erste, dem Schmierstoffeinlass zugeordnete Kammer und eine zweite, dem Schmierstoffauslass zugeordnete Kammer unterteilt, die über eine Bypass-Leitung selektiv zum Dosieren und/oder Umschichten des Schmierstoffes miteinander verbindbar sind. Dabei wird es bevorzugt, wenn das Rückschlagventil derart in einem Kanal zwischen dem Schmierstoffeinlass und der ersten Kammer angeordnet ist, dass Schmierstoff von dem Schmierstoffeinlass in die erste Kammer strömen kann und eine Strömung von Schmierstoff aus der ersten Kammer zu dem Schmierstoffeinlass blockiert wird, wobei das Rückschlagventil die Bypass-Leitung sperrt, wenn Schmierstoff aus dem Schmierstoffeinlass in die erste Kammer strömt.

Erfindungsgemäß wird eine besonders einfache Anbindung des Injektors an die Verteilerplatte eines Schmiermittelverteilers dadurch ermöglicht, dass das Gehäuse an einem Ende einen Außengewindeabschnitt aufweist, in welchem eine umlaufende Nut ausgebildet ist, in die der Schmierstoffauslass mündet, wobei der Schmierstoffeinlass in einer an demselben Ende liegenden Stirnseite des Gehäuses ausgebildet ist. Durch Einschrauben des Injektors werden folglich sowohl der Schmierstoffeinlass als auch der Schmierstoffauslass mit den entsprechenden Anschlüssen der Verteilerplatte verbunden.

Nach einer bevorzugten Ausführungsform der Erfindung ist der Kolben mit einem Anzeigestift verbunden, der in Abhängigkeit der Position des Kolbens in dem Zylinderraum zumindest teilweise aus dem Gehäuse heraus verschiebbar ist. Auch bei einer großen Anzahl von Injektoren kann somit der Defekt eines einzelnen Injektors leicht festgestellt werden, da bei jedem Hub des Dosierkolbens der Anzeigestift aus dem Gehäuse fährt, wodurch eine visuelle Kontrolle der Funktion des betreffenden Injektors möglich ist. Während des Umschichtens des Schmierstoffes wird der Anzeigestift wieder in das Gehäuse zurückgezogen. Hierdurch wird angezeigt, dass der Injektor danach wieder zur nächsten Abschmierung betriebsbereit ist.

Nach einer weiteren Ausführungsform der Erfindung ist der Kolben des Injektors zumindest bereichsweise durch einen Magnet gebildet, wobei in dem Gehäuse eine von dem Zylinderraum getrennte und durch ein Sichtfenster von außen einsehbare Kugelbahn ausgebildet ist, in welcher eine Kugel derart frei bewegbar aufgenommen ist, dass die Kugel der Bewegung des Magneten folgt. Die von außen sichtbare Bewegung der Kugel zeigt somit nicht nur an, ob der Injektor defekt ist, sondern auch in welchem Betriebszustand sich der Injektor befindet.

Wenn der Injektor im Wesentlichen liegend auf der Verteilerplatte eines Schmiermittelverteilers angeordnet werden soll, wird es bevorzugt, dass das Gehäuse wenigstens eine abgeflachte Seitenwand aufweist, in welcher der Schmierstoffauslass und der Schmierstoffeinlass liegen.

Die Bypass-Leitung kann erfindungsgemäß im Wesentlichen in Längsrichtung des Gehäuses verlaufen, um die beiden durch den Kolben getrennten Kammern des Zylinderraumes selektiv miteinander zu verbinden. Dabei kann die Bypass-Leitung nach einer Ausführungsform zumindest bereichsweise durch einen Kanal gebildet sein, der die zweite Kammer mit dem Schmierstoffauslass verbindet. Alternativ oder zusätzlich hierzu ist es auch möglich, dass der Kolben als ein Hohlkolben ausgebildet ist, wobei sich die Bypass-Leitung zumindest bereichsweise durch den Hohlkolben erstreckt.

Weiter wird die der Erfindung zugrunde liegende Aufgabe unabhängig von den zuvor genannten Merkmalen durch eine Verteilerplatte gelöst, die insbesondere zur Verwendung in einem Schmiermittelverteiler der oben genannten Art geeignet ist. Diese Verteilerplatte weist eine Schmierstoffzuleitung, die über Zufuhrleitungen in jeweils einen ersten Anschluss mündet, der mit einem Schmierstoffeinlass eines Injektors verbindbar ist, und mehrere Schmierstoffabgabeleitungen auf, die über Abfuhrleitungen in jeweils einen zweiten Anschluss münden, der mit einem Schmierstoffauslass eines Injektors verbindbar ist, wobei die ersten und zweiten Anschlüsse an oder in einer ersten Seitenfläche und die Schmierstoffableitungen an oder in einer weiteren Seitenfläche der Verteilerplatte ausgebildet sind. Durch diese Gestaltung der Verteilerplatte ist es besonders einfach möglich, entweder einzelne Injektoren auszuwechseln oder die gesamte Verteilerplatte auszuwechseln, da diese beispielsweise nur über zwei Schrauben oder dergleichen an einem Element befestigt sein kann, welches entsprechend den Schmierstoffableitungen Kanäle aufweist, die zu den einzelnen Schmierstellen führen. Die (weitere) Seitenfläche der Verteilerplatte, in welcher die Schmierstoffableitungen angeordnet sind, bildet somit die Anschluss- oder Verbindungsfläche, über welche die Verteilerplatte an das Element angeschlossen wird.

Erfindungsgemäß sind in der ersten Seitenfläche der Verteilerplatte mehrere Bohrungen, insbesondere Gewindebohrungen, vorgesehen, in deren Stirnflächen jeweils die ersten Anschlüsse und in deren Mantelfläche jeweils die zweiten Anschlüsse angeordnet sind. Durch Einstecken und/oder Einschrauben eines Injektors werden somit die Anschlüsse mit dem Schmierstoffeinlass und dem Schmierstoffauslass des Injektors verbunden.

Nach einer alternativen Realisierungsmöglichkeit münden die ersten Anschlüsse und die zweiten Anschlüsse in die erste Seitenfläche der Verteilerplatte. Bei dieser Ausführungsform können die Injektoren im Wesentlichen liegend auf der Verteilerplatte fixiert werden.

Die Erfindung wird nachfolgend anhand von Ausführungsbeispielen und unter Bezugnahme auf die Zeichnung näher beschrieben. Dabei bilden alle beschriebenen und/oder bildlich dargestellten Merkmale für sich oder in beliebiger Kombination den Gegenstand der Erfindung, unabhängig von ihrer Zusammenfassung in den Ansprüchen oder deren Rückbeziehung.

Es zeigen schematisch:
- Fig. 1: in Perspektivansicht einen Schmiermittelverteiler nach einer Ausführungsform der Erfindung,
- Fig. 2: in Seitenansicht den Schmiermittelverteiler nach Fig. 1,
- Fig. 3: eine Draufsicht auf den Schmiermittelverteiler nach Fig. 1,
- Fig. 4: einen Schnitt durch den Schmiermittelverteiler nach Fig. 1,
- Fig. 5: in Perspektivansicht einen Injektor des Schmiermittelverteilers nach Fig. 1,
- Fig. 6: einen Schnitt durch den Injektor nach Fig. 5,
- Fig. 7: in Perspektivansicht einen Schmiermittelverteiler nach einer weiteren Realisierungsmöglichkeit,
- Fig. 8: eine Draufsicht auf den Schmiermittelverteiler nach Fig. 7,
- Fig. 9: in Perspektivansicht einen Injektor des Schmiermittelverteilers nach Fig. 7 und
- Fig. 10: einen Schnitt durch den Injektor nach Fig. 9.

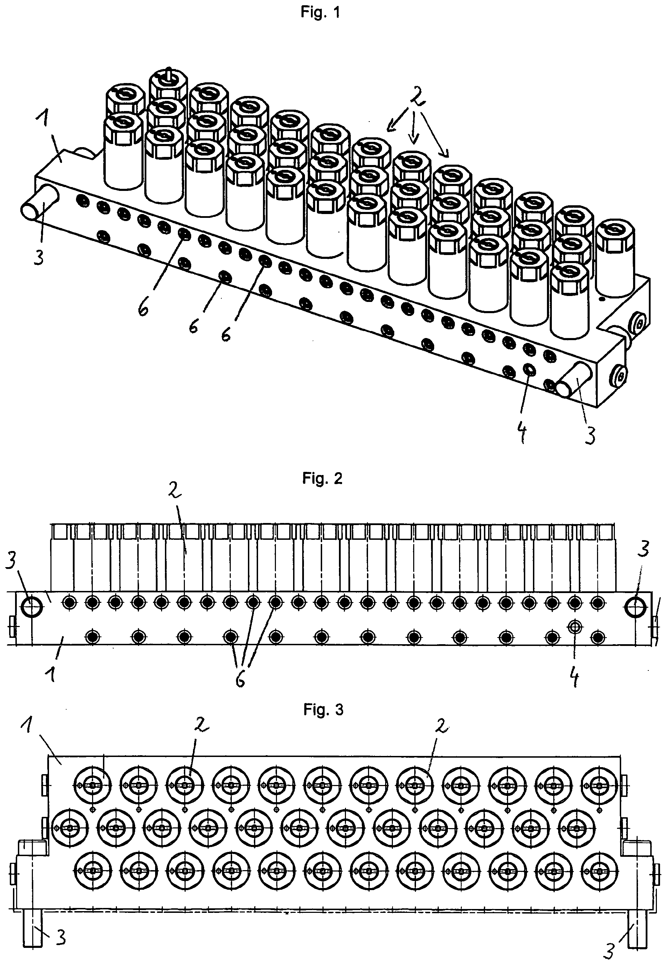

Der in den Fig. 1 bis 4 dargestellte Schmiermittelverteiler ist im Wesentlichen durch eine Verteilerplatte 1 und mehrere mit dieser verbundene Injektoren 2 gebildet. Die Verteilerplatte 1 ist dabei im Wesentlichen quaderförmig gestaltet und weist zwei Vorsprünge auf, in denen Schrauben 3 oder dergleichen Befestigungsmittel vorgesehen sind, um den Schmiermittelverteiler an einem in den Figuren nicht gezeigten Element zu befestigen. In der Anschlussfläche, aus welcher die Schrauben 3 hervorragen, ist eine Schmierstoffzuleitung 4 ausgebildet, über welche unter Druck stehender Schmierstoff in den Schmiermittelverteiler eingebracht werden kann.

Die Verteilerplatte 1 ist dabei derart gestaltet, dass mehrere Bohrungen vorgesehen sind, die ausgehend von der Schmierstoffzuleitung 4 Zufuhrleitungen 5 bilden, die in mehrere erste Anschlüsse münden. Weiter sind in der Anschlussfläche der Verteilerplatte 1 mehrere Schmierstoffableitungen 6 entsprechend der Anzahl der auf der Verteilerplatte 1 befestigbaren Injektoren 2 vorgesehen, die durch Abfuhrleitungen 7 jeweils in einen zweiten Anschluss münden. Sowohl die Zufuhr von Schmierstoff als auch die Abfuhr von Schmierstoff aus dem Schmiermittelverteiler erfolgt somit über die Anschlussfläche der Verteilerplatte.

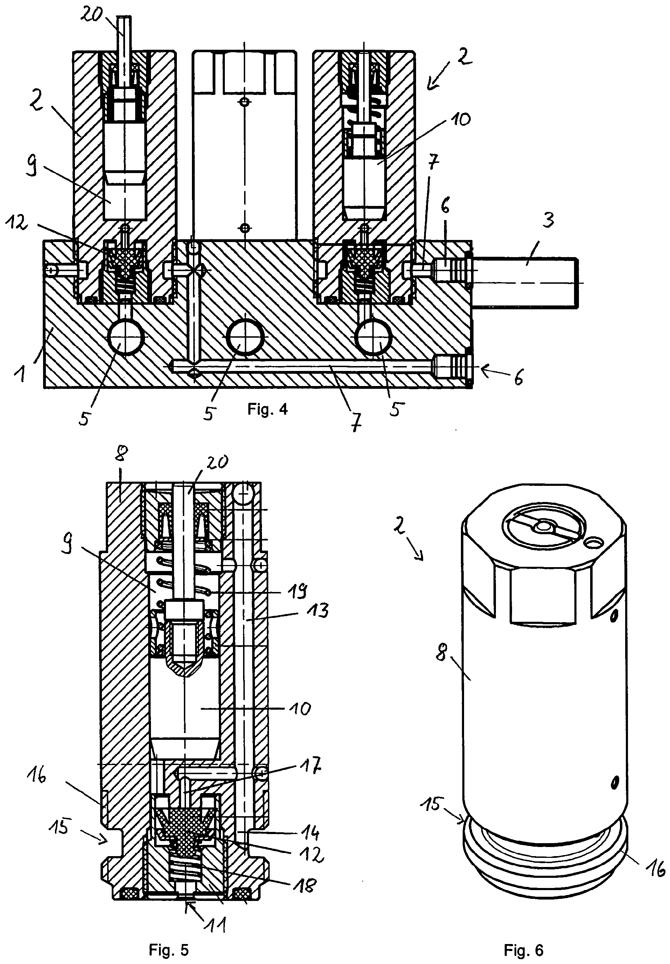

In einer in Fig. 1 senkrecht zu der Anschlussfläche verlaufenden und an diese angrenzenden Fläche der Verteilerplatte 1 sind eine Vielzahl von Gewindebohrungen entsprechend der Anzahl der Injektoren 2 ausgebildet. Wie aus der Schnittansicht der Fig. 4 ersichtlich ist, mündet in die Stirnfläche jeder der Bohrungen eine der Zufuhrleitungen 5 und definiert damit den ersten Anschluss, während in einer Mantelfläche der Bohrungen jeweils eine Abfuhrleitung 7 unter Ausbildung jeweils eines zweiten Anschlusses mündet. Wie unten näher erläutert wird, sind die Injektoren dabei im Wesentlichen aufrecht stehend, d.h. mit ihrer Längsachse senkrecht zu der Ebene der Verteilerplatte 1 in die Gewindebohrungen eingeschraubt, wobei die Injektoren 2 hierdurch jeweils an einen ersten und einen zweiten Anschluss angeschlossen werden. Die in die Anschlussfläche der Verteilerplatte 1 mündenden Schmierstoffableitungen 6 können jeweils durch ein in Fig. 4 angedeutetes Rückschlagventil verschlossen sein.

Unter Bezugnahme auf die Fig. 5 und 6 wird der Aufbau und die Funktion der Injektoren 2 näher erläutert. Jeder der Injektoren 2 ist im Wesentlichen durch ein beispielsweise zylindrisches Gehäuse 8 und eine in diesem angeordnete Dosier- und Umsteuereinheit gebildet.

In dem Gehäuse 8 ist ein Zylinderraum 9 ausgebildet, in welchem ein Kolben 10 abgedichtet verschiebbar ist, so dass der Zylinderraum 9 in eine in der Fig. 6 untere, erste Kammer und eine (obere) zweite Kammer unterteilt wird. In der in Fig. 6 unteren Stirnseite des Gehäuses 8 ist ein Schmierstoffeinlass 11 ausgebildet, der durch Einschrauben des Injektors 2 in die Verteilerplatte 1 mit dem ersten Anschluss in der Gewindebohrung der Verteilerplatte 1 verbindbar ist. Von dem Schmierstoffeinlass 11 führt ein Kanal in die erste Kammer des Zylinderraumes 9, wobei in diesem Kanal ein Rückschlagventil 12 derart vorgesehen ist, dass Schmierstoff von dem Schmierstoffeinlass 11 in die erste Kammer strömen kann, während eine Strömung in umgekehrter Richtung blockiert wird.

Die zweite Kammer des Zylinderraumes 9 ist über einen im Wesentlichen parallel zu dem Zylinderraum 9 verlaufenden Kanal 13 mit einem Schmierstoffauslass 14 verbunden, welcher an demselben Ende des Gehäuses 8 ausgebildet ist, in welchem auch der Schmierstoffeinlass 11 vorgesehen ist. Der Schmierstoffauslass 14 ist dabei jedoch nicht in der Stirnfläche des Gehäuses 8 ausgebildet, sondern in einer Nut 15, welche in der Nähe der Stirnwand mit dem Schmierstoffeinlass 11 liegt. Die Nut ist dabei in einem Außengewindeabschnitt 16 vorgesehen, der zum Einschrauben des Injektors 2 in eine entsprechende Gewindebohrung der Verteilerplatte 1 dient.

Von dem Kanal 13 zweigt eine Bypass-Leitung 17 ab, die von dem Rückschlagventil 12 verschlossen wird, solange Schmierstoff durch den Schmierstoffeinlass 11 in das Gehäuse 8 eingebracht wird. Hierzu wird das Rückschlagventil 12 von einer Feder 18 in Richtung zu dem Kolben 10 hin beaufschlagt. Eine weitere, stärkere Feder 19 drängt den Kolben 10 in Fig. 6 nach unten.

Auf der in Fig. 6 oberen Seite des Kolbens 10 ist ein Anzeigestift 20 ausgebildet, der gemeinsam mit dem Kolben 10 verschiebbar ist. In der in Fig. 6 gezeigten Stellung ist der Anzeigestift 20 im Wesentlichen in das Gehäuse 8 zurückgezogen. Bei einer Verschiebung des Kolbens 10 tritt der Anzeigestift 20 jedoch aus dem Gehäuse 8 heraus, so dass die Funktion des Injektors 2 von außen ersichtlich ist.

Das Dosieren und Umschichten von Schmierstoff mit dem Injektor 6 wird nachfolgend näher erläutert: In der Ausgangsposition der Fig. 6 ist der Kolben 10 durch die Kraft der Feder 19 in seine untere Endlage verschoben und das Rückschlagventil 12 wird durch die Kraft der Feder 18 zum Abdichten der Bypass-Leitung 17 nach oben gedrängt. Die oberhalb des Kolbens 10 vorgesehene zweite Kammer des Zylinderraumes 9 sowie der Kanal 13 sind mit Schmierstoff gefüllt. Wenn nun weiterer Schmierstoff unter Druck durch den Schmierstoffeinlass 11 eingebracht wird, kann dieser die Dichtlippen des Rückschlagventils 12 passieren und über den in der Figur links der Bypass-Leitung 17 verlaufenden senkrechten Kanal in die erste Kammer des Zylinderraumes 9 gelangen. Hierdurch wird der Kolben 10 gegen die Kraft der Feder 19 verschoben. Dies bewirkt, dass der in der zweiten Kammer des Zylinderraumes 9 enthaltene Schmierstoff durch den Kanal 13 und über den Schmierstoffauslass 14 abgegeben wird. Der Schmierstoff gelangt dann über die Abfuhrleitungen 7 in der Verteilerplatte 1 zu der entsprechenden Schmierstoffableitung 6, von welcher der Schmierstoff zu einer Schmierstelle gelangt.

Sobald der Druck des Schmierstoffes, der über den Schmierstoffeinlass 11 zugeführt wird, wieder abfällt, wird der Kolben 10 durch die Kraft der Feder 19 nach unten gedrängt. Hierdurch wird auch das Rückschlagventil 12 gegen die Kraft der (schwächeren) Feder 18 in der Figur nach unten bewegt, so dass eine Verbindung zwischen der ersten Kammer des Zylinderraumes 9 und der Bypass-Leitung 17 eröffnet wird. Der Schmierstoff kann somit aus der ersten Kammer des Zylinderraumes 9 über die Bypass-Leitung 17 und den Kanal 13 in die zweite Kammer des Zylinderraumes 9 umgeschichtet werden. Der Injektor 2 befindet sich dann wieder in seiner in Fig. 6 gezeigten Ausgangsstellung.

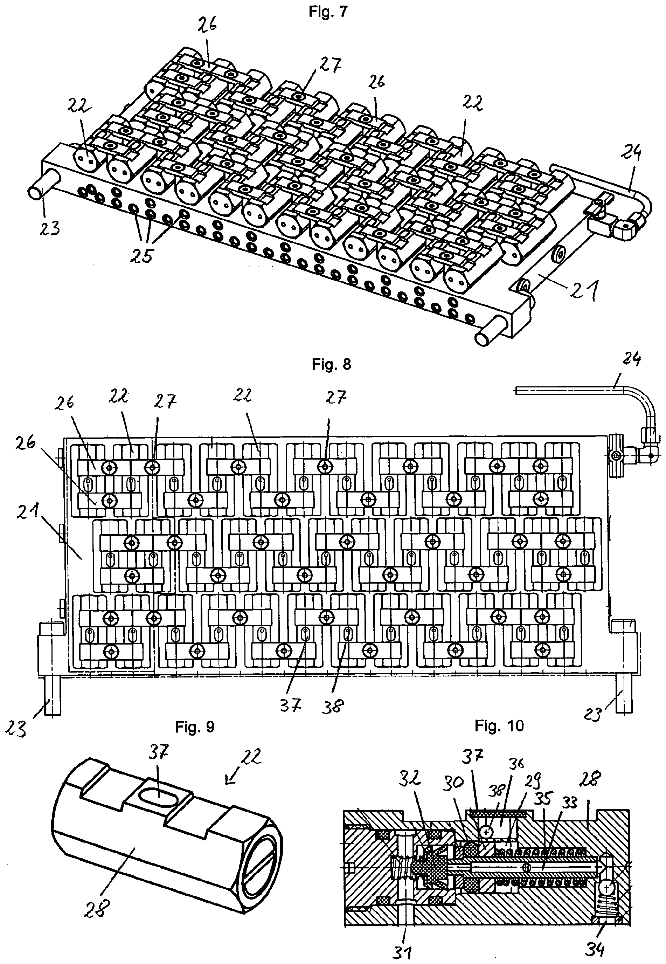

Eine weitere Realisierungsmöglichkeit eines ebenfalls im Wesentlichen aus einer Verteilerplatte 21 und mehreren Injektoren 22 gebildeten Schmiermittelverteilers ist in den Fig. 7 bis 10 dargestellt. Im Gegensatz zu der erfindungsgemäßen Ausführungsform nach den Fig. 1 bis 6 sind die Injektoren 22 nicht senkrecht stehend auf der Verteilerplatte 21 positioniert, sondern im Wesentlichen liegend, d.h. in einer Position, in welcher die Längsachse der Injektoren 22 sich parallel zu der Ebene der Verteilerplatte 21 erstreckt.

Die Verteilerplatte 21 ist wie oben beschrieben über Schrauben 23 mit einem nicht dargestellten Element verbindbar. In der Verteilerplatte 21 sind eine Schmierstoffzuleitung 24, die über Zufuhrleitungen mit jeweils einem ersten Anschluss verbunden ist und Schmierstoffableitungen 25 vorgesehen, die über entsprechende Abfuhrleitungen jeweils in einen zweiten Anschluss münden. Die ersten und zweiten Anschlüsse sind dabei nicht in einer Bohrung angeordnet, sondern liegen in der in Fig. 7 oberen Seitenfläche der Verteilerplatte 21.

Wie aus Fig. 8 ersichtlich ist, sind jeweils zwei Injektoren 22 über zwei Haltebleche 26 an der Verteilerplatte 21 befestigt. Dabei ist jedes Halteblech 26 über eine Schraube 27 gegen die Verteilerplatte 21 gespannt, so dass die Injektoren 22 zwischen den Halteblechen 26 und der Verteilerplatte 21 festgeklemmt werden.

Aus der Darstellung der Fig. 9 und 10 ist ersichtlich, dass die Injektoren 22 einen ähnlichen Aufbau wie die oben beschriebenen Injektoren 2 haben. Hierbei ist in einem beispielsweise sechskantigen Gehäuse 28 ein Zylinderraum 29 mit einem Kolben 30 gebildet. Der Kolben besteht dabei aus zwei Kolbenscheiben und einem Dichtungsring, wobei eine der Kolbenscheiben als ein Ringmagnet ausgebildet ist.

Über einen Schmierstoffeinlass 31 gelangt Schmierstoff an einem Rückschlagventil 32 vorbei in die in Fig. 10 linke, erste Kammer des Zylinderraumes 29. In dem Kolben 30, der als ein Hohlkolben ausgebildet ist, ist eine Bypass-Leitung 33 für das Umschichten von Schmierstoff ausgebildet. Die in Fig. 10 rechte Kammer des Zylinderraumes 29 ist mit einem Schmierstoffauslass 34 verbunden, der ein Rückschlagventil aufweist. Wie oben unter Bezugnahme auf die erste Ausführungsform erläutert, erfolgt das Ausbringen des Schmierstoffes durch eine Verschiebung des Kolbens 30 in Fig. 10 nach rechts, wenn Schmierstoff unter Druck durch den Schmierstoffeinlass 11 in das Gehäuse 28 eingebracht wird. Das Umschichten des Schmierstoffes von der ersten in die zweite Kammer erfolgt dann durch die Kraft der Feder 35, wenn der Druck des Schmierstoffes an dem Schmierstoffeinlass 31 abfällt.

Zur Anzeige der Funktion und des Betriebszustandes des Injektors 22 ist parallel zu dem Zylinderraum 29 eine Kugelbahn 36 in dem Gehäuse 28 ausgebildet. Die Kugelbahn 36 ist durch ein Sichtfenster 37 von außen einsehbar. In der Kugelbahn 36 ist eine Kugel 38 frei verschiebbar gelagert, wobei die Kugel 38 aus einem magnetisierbaren Material besteht, so dass die Kugeln 38 in der Kugelbahn 36 der Bewegung des Ringmagneten des Kolbens 30 folgt. Die Bewegung des Kolbens 30 ist somit durch die Bewegung der Kugel 38 von außen sichtbar.

**Bezugszeichenliste:**

| | | | |
|---|---|---|---|
| 1 | Verteilerplatte | 26 | Halteblech |
| 2 | Injektor | 27 | Schraube |
| 3 | Schraube | 28 | Gehäuse |
| 4 | Schmierstoffzuleitung | 29 | Zylinderraum |
| 5 | Zufuhrleitung | 30 | Kolben |
| 6 | Schmierstoffableitung | 31 | Schmierstoffeinlass |
| 7 | Abfuhrleitung | 32 | Rückschlagventil |
| 8 | Gehäuse | 33 | Bypass-Leitung |
| 9 | Zylinderraum | 34 | Schmierstoffauslass |
| 10 | Kolben | 35 | Feder |
| 11 | Schmierstoffeinlass | 36 | Kugelbahn |
| 12 | Rückschlagventil | 37 | Sichtfenster |
| 13 | Kanal | 38 | Kugel |
| 14 | Schmierstoffauslass | | |
| 15 | Nut | | |
| 16 | Gewindeabschnitt | | |
| 17 | Bypass-Leitung | | |
| 18 | Feder | | |
| 19 | Feder | | |
| 20 | Anzeigestift | | |
| 21 | Verteilerplatte | | |
| 22 | Injektor | | |
| 23 | Schraube | | |
| 24 | Schmierstoffzuleitung | | |
| 25 | Schmierstoffableitung | | |

## Patentansprüche

1. Injektor für einen Schmiermittelverteiler mit einer Verteilerplatte (1), wobei der Injektor (2) mit der Verteilerplatte (1) verbindbar ist, wobei der Injektor (2) aus einem Gehäuse (8), das eine Längsachse definiert, mit einem Einlass (11) und einem Auslass (14), die mit entsprechenden Anschlüssen in der Verteilerplatte in Verbindung stehen, sowie einer in dem Gehäuse ausgebildeten Dosier- und Umsteuereinheit gebildet ist, die einen Zylinderraum (9) und einen darin durch den Schmierstoffdruck gegen die Kraft eines elastischen Elements (19) verschiebbaren Kolben (10) sowie ein zwischen dem Zylinderraum und dem Einlass (11) angeordnetes Rückschlagventil (12) aufweist, wobei der Kolben den Zylinderraum in eine erste, dem Einlass (11) zugeordnete Kammer und eine zweite, dem Auslass (14) zugeordnete Kammer unterteilt, die über eine Bypass-Leitung (17) selektiv zum Dosieren und/oder Umschichten des Schmierstoffes miteinander verbindbar sind, wobei die Ein- und Auslässe auf der der Verteilerplatte zugewandten Seite des Gehäuses angeordnet sind, wobei das Gehäuse (8) des Injektors (2) an einem Ende einen Außengewindeabschnitt (16) aufweist, in welchem eine umlaufende Nut (15) ausgebildet ist, in die der Auslass (14) mündet, wobei der wenigstens eine Injektor (2) mit dem Außengewindeabschnitt (16) in eine Gewindebohrung der Verteilerplatte (1) einschraubbar ist, wobei der Einlass (11) in einer an demselben Ende liegende Stirnseite des Gehäuses (8) ausgebildet ist

2. Schmiermittelverteiler mit einer Verteilerplatte (1) und wenigstens einem mit dieser verbindbaren Injektor (2) nach Anspruch 1, wobei der wenigstens eine Injektor (2) derart an der Verteilerplatte (1) befestigt ist, dass die Längsachse des Gehäuses (8) des Injektors zumindest im Wesentlichen senkrecht zu der Fläche der Verteilerplatte (1) ausgerichtet ist, in der die mit dem Ein- und Auslass (11, 14) verbundenen Anschlüsse vorgesehen sind.

3. Injektor nach Anspruch 1, **dadurch gekennzeichnet, dass** das Rückschlagventil (12) derart in einem Kanal zwischen dem Schmierstoffeinlass (11) und der ersten Kammer angeordnet ist, dass Schmierstoff von dem Schmierstoffeinlass in die erste Kammer strömen kann und eine Strömung von Schmierstoff aus der ersten Kammer zu dem Schmierstoffeinlass blockiert wird, wobei das Rückschlagventil (12) die Bypass-Leitung (17) sperrt, wenn Schmierstoff aus dem Schmierstoffeinlass in die erste Kammer strömt.

4. Injektor nach einem der Ansprüche 1 oder 3, **dadurch gekennzeichnet, dass** der Kolben (10) mit einem Anzeigestift (20) verbunden ist, der in Abhängigkeit der Position des Kolbens (10) in dem Zylinderraum (9) zumindest teilweise aus dem Gehäuse (8) heraus verschiebbar ist

5. Schmiermittelverteiler nach Anspruch 2, wobei die Verteilerplatte (1) mit einer Schmierstoffzuleitung (4), die über Zufuhrleitungen (5) in jeweils einen ersten Anschluss mündet, der mit einem Schmierstoffeinlass (11) eines Injektors (2) verbindbar ist, und mit mehreren Schmierstoffableitungen (6), die über Abfuhrleitungen (7) in jeweils einen zweiten Anschluss münden, der mit einem Schmierstoffauslass (14) eines Injektors verbindbar ist,
wobei die ersten und zweiten Anschlüsse an oder in einer ersten Seitenfläche und die Schmierstoffableitungen an oder in einer weiteren Seitenfläche der Verteilerplatte (1) ausgebildet sind, wobei in der ersten Seitenfläche mehrere Bohrungen, insbesondere Gewindebohrungen, vorgesehen sind, in deren Stirnflächen jeweils die ersten Anschlüsse und in deren Mantelfläche jeweils die zweiten Anschlüsse angeordnet sind.

6. Schmiermittelverteiler nach Anspruch 5, **dadurch gekennzeichnet, dass** die ersten Anschlüsse und die zweiten Anschlüsse in die erste Seitenfläche münden.

## Claims

1. Injector for a lubricant distributor having a distributor plate (1), it being possible for the injector (2) to be connected to the distributor plate (1), the injector (2) being formed from a housing (8) which defines a longitudinal axis, with an inlet (11) and an outlet (14) which are connected to corresponding connectors in the distributor plate, and from a metering and rerouting unit which is configured in the housing and has a cylinder space (9), a piston (10) which can be displaced therein by way of the lubricant pressure counter to the force of an elastic element (19), and a check valve (12) which is arranged between the cylinder space and the inlet (11), the piston dividing the cylinder space into a first chamber which is assigned to the inlet (11) and a second chamber which is assigned to the outlet (14), which chambers can be connected to one another via a bypass line (17) selectively for metering and/or redistributing the lubricant, the inlets and outlets being arranged on that side of the housing which faces the distributor plate, the housing (8) of the injector (2) having an external thread section (16) at one end, in which external thread section (16) a circumferential groove (15) is configured, into which the outlet (14) opens, it being possible for the at least one injector (2) to be screwed by way of the external thread section (16) into a threaded bore of the distributor plate (1), the inlet (11) being configured in an end side of the housing (8), which end side lies at the same end.

2. Lubricant distributor having a distributor plate (1) and at least one injector (2) which can be connected to the latter according to Claim 1, the at least one injector (2) being fastened to the distributor plate (1) in such a way that the longitudinal axis of the housing (8) of the injector is oriented at least substantially perpendicularly with respect to that face of the distributor plate (1), in which the connectors which are connected to the inlet and outlet (11, 14) are provided.

3. Injector according to Claim 1, **characterized in that** the check valve (12) is arranged in a duct between the lubricant inlet (11) and the first chamber in such a way that lubricant can flow from the lubricant inlet into the first chamber and a flow of lubricant out of the first chamber to the lubricant inlet is blocked, the check valve (12) shutting off the bypass line (17) when lubricant flows out of the lubricant inlet into the first chamber.

4. Injector according to one of Claims 1 to 3, **characterized in that** the piston (10) is connected to an indicator pin (20) which can be displaced at least partially out of the housing (8) in a manner which is dependent on the position of the piston (10) in the cylinder space (9).

5. Lubricant distributor according to Claim 2, the distributor plate (1) with a lubricant feed line (4) which opens via supply lines (5) into in each case one first connector which can be connected to a lubricant inlet (11) of an injector (2), and with a plurality of lubricant outlet lines (6) which open via discharge lines (7) into in each case one second connector which can be connected to a lubricant outlet (14) of an injector, the first and second connectors being configured on or in a first side face and the lubricant outlet lines being configured on or in a further side face of the distributor plate (1), a plurality of bores, in particular threaded bores, being provided in the first side face, in the end faces of which bores in each case the first connectors are arranged and in the circumferential face of which bores in each case the second connectors are arranged.

6. Lubricant distributor according to Claim 5, **characterized in that** the first connectors and the second connectors open into the first side face.

## Revendications

1. Injecteur pour un distributeur de lubrifiant comprenant une plaque de distribution (1), l'injecteur (2) pouvant être connecté à la plaque de distribution (1), l'injecteur (2) étant formé d'un boîtier (8) qui définit un axe longitudinal, avec une entrée (11) et une sortie (14) qui sont en liaison avec des raccords correspondants dans la plaque de distribution, ainsi qu'une unité de dosage et de commande réalisée dans le boîtier, qui présente un espace de cylindre (9) et un piston (10) déplaçable dans celui-ci sous l'effet de la pression de lubrifiant à l'encontre de la force d'un élément élastique (19) ainsi qu'un clapet antiretour (12) disposé entre l'espace de cylindre et l'entrée (11), le piston divisant l'espace de cylindre en une première chambre associée à l'entrée (11) et une deuxième chambre associée à la sortie (14), qui peuvent être connectées l'une à l'autre par le biais d'une conduite de dérivation (17) de manière sélective pour le dosage et/ou la réorientation du lubrifiant, l'entrée et la sortie étant disposées du côté du boîtier tourné vers la plaque de distribution, le boîtier (8) de l'injecteur (2) présentant à une extrémité une portion à filetage extérieur (16) dans laquelle est réalisée une rainure périphérique (15) dans laquelle débouche la sortie (14), l'au moins un injecteur (2) pouvant être vissé avec la portion à filetage extérieur (16) dans un alésage fileté de la plaque de distribution (1), l'entrée (11) étant réalisée dans un côté frontal du boîtier (8) situé à la même extrémité.

2. Distributeur de lubrifiant comprenant une plaque de distribution (1) et au moins un injecteur (2) selon la revendication 1 pouvant être connecté à celle-ci, l'au moins un injecteur (2) étant fixé à la plaque de distribution (1) de telle sorte que l'axe longitudinal du boîtier (8) de l'injecteur soit orienté au moins essentiellement perpendiculairement à la surface de la plaque de distribution (1) dans laquelle sont prévus des raccords connectés à l'entrée et à la sortie (11, 14) .

3. Injecteur selon la revendication 1, **caractérisé en ce que** le clapet antiretour (12) est disposé de telle sorte dans un canal entre l'entrée de lubrifiant (11) et la première chambre que du lubrifiant peut s'écouler depuis l'entrée de lubrifiant dans la première chambre et un écoulement de lubrifiant de la première chambre vers l'entrée de lubrifiant est bloqué, le clapet antiretour (12) bloquant la conduite de dérivation (17) lorsque du lubrifiant s'écoule hors de l'entrée de lubrifiant dans la première chambre.

4. Injecteur selon l'une quelconque des revendications 1 ou 3, **caractérisé en ce que** le piston (10) est connecté à une goupille d'affichage (20) qui peut être déplacée au moins en partie hors du boîtier (8) en fonction de la position du piston (10) dans l'espace de cylindre (9) .

5. Distributeur de lubrifiant selon la revendication 2, dans lequel la plaque de distribution (1) avec une conduite d'alimentation en lubrifiant (4), qui débouche par le biais de conduites d'amenée (5) dans un premier raccord respectif qui peut être connecté à une entrée de lubrifiant (11) d'un injecteur (2), et avec plusieurs conduites de sortie de lubrifiant (6) qui débouchent par le biais de conduites d'évacuation (7) dans un deuxième raccord respectif qui peut être connecté à une sortie de lubrifiant (14) d'un injecteur,
les premiers et deuxièmes raccords étant réalisés sur ou dans une première surface latérale et les conduites de sortie de lubrifiant étant réalisées sur ou dans une surface latérale supplémentaire de la plaque de distribution (1), plusieurs alésages étant prévus dans la première surface latérale, en particulier des alésages filetés dans les surfaces frontales desquels sont à chaque fois disposés les premiers raccords et dans la surface d'enveloppe desquels sont à chaque fois disposés les deuxièmes raccords.

6. Distributeur de lubrifiant selon la revendication 5, **caractérisé en ce que** les premiers raccords et les deuxièmes raccords débouchent dans la première surface latérale.
